Europäisches Patentamt

European Patent Office

Office européen des brevets

(19)

(11) Veröffentlichungsnummer: **0 283 557**
**B1**

(12) **EUROPÄISCHE PATENTSCHRIFT**

(45) Veröffentlichungstag der Patentschrift: **30.01.91**

(51) Int. Cl.⁵: **A 61 C 19/00, B 29 C 35/08**

(21) Anmeldenummer: **87114636.1**

(22) Anmeldetag: **07.10.87**

(54) Behandlungskammer zum Photoplymerisieren von Dental-Kunststoffen.

(30) Priorität: **13.03.87 DE 3708204**

(43) Veröffentlichungstag der Anmeldung:
**28.09.88 Patentblatt 88/39**

(45) Bekanntmachung des Hinweises auf die
Patenterteilung:
**30.01.91 Patentblatt 91/05**

(84) Benannte Vertragsstaaten:
**AT BE CH DE ES FR GB GR IT LI LU NL SE**

(56) Entgegenhaltungen:
**GB-A-2 098 439**
**US-A-3 519 517**
**US-A-4 412 134**

(73) Patentinhaber: **Kulzer GmbH**
**Philipp-Reis-Strasse 8**
**D-6393 Wehrheim (TS.)1 (DE)**

(72) Erfinder: **Oppawsky, Steffen**
**Gartenfeldstrasse 22 A**
**D-6380 Bad Homburg (DE)**

(74) Vertreter: **Heinen, Gerhard, Dr.**
**Heraeus Holding GmbH Heraeusstrasse 12-14**
**D-6450 Hanau am Main (DE)**

Courier Press, Leamington Spa, England.

**Beschreibung**

Die Erfindung bezieht sich auf ein Lichtgerät mit einer Strahlungsquelle, einem Lichtleiter und einer Behandlungskammer an demjenigen Ende des Lichtleiters, das der Strahlungsquelle abgekehrt ist, wobei die Behandlungskammer auf ihrer Innenseite lichtreflektierend ausgebildet ist.

Ein Lichtgerät der vorstehend charakterisierten Art ist aus der GB—A—14 85 908 bekannt. Bei diesem Lichtgerät bildet das die Lichtstrahlung emittierende Ende des Lichtleiters eine Wand der Behandlungskammer. Die Behandlungskammer weist einen geschlitzten Wandteil auf. Durch den nichtverschließbaren Schlitz in diesem Wandteil wird das zu bestrahlende Werkstück, insbesondere zu lötende Drähte, in die Behandlungskammer eingelegt. Durch diese Ausbildung der Behandlungskammer ist ihre Verwendungsmöglichkeit in Kombination mit einem Lichtgerät, bei dem die Lichtzufuhr zur Behandlungskammer über einen Lichtleiter erfolgt, eingeschränkt.

Aus der US—A 4,412,134 ist eine Bestrahlungsvorrichtung für Dental-Objekte aus Kunststoff bekannt. Sie weist in einem eine Behandlungskammer bildenden Gehäuse mindestens eine Strahlungsquelle mit innerhalb eines Reflektors angeordneter Lampe auf. Das Licht wird mittels des die Lampe umgebenden Reflektors und wenn eine zusätzliche Strahlungsquelle vorgesehen ist mittels eines in deren Strahlengang angeordneten Zusatzreflektors auf das zu behandelnde Dental-Objekt geleitet. Die den Zusatzreflektor tragende Gehäusewand ist als schwenkbarer Deckel ausgebildet, um die Dental-Objekte in das Gehäuse einzubringen oder aus ihm zu entnehmen. Eine von der (den) Strahlungsquelle(n) entfernt liegende Gehäusewand ist mit Schlitzen versehen, um die von den Lampen erzeugte Wärme mittels eines im Gehäuse angeordneten Gebläses aus dem Gehäuse nach außen abzuführen.

Aus der US—A—3,519,517 ist eine Heizvorrichtung bekannt, die eine Quelle zur Abgabe von Mikrowellen aufweist. Die Mikrowellen werden mittels eines Hohlleiters einer Behandlungskammer zugeführt, in der das zu erhitzende teilweise aus Harz bestehende Gut angeordnet ist. Die Behandlungskammer weist im unteren Bereich ihrer Frontwand eine Tür zum Ein- und Ausbringen des zu behandelnden Gutes auf. Eine Seitenwand der Behandlungskammer ist mit einer Öffnung versehen, durch die die Mikrowellen in die Behandlungskammer geleitet werden. Der Hohlleiter ist mittels auf der Außenseite dieser Seitenwand angeordneter Befestigungsmittel mit der Seitenwand fest verbunden. Das zu erwärmende Gut ist auf einem dielektrischem Block angeordnet.

Aufgabe der Erfindung ist es, die Verwendungsmöglichkeit eines Lichtgerätes, bei dem die Lichtzufuhr zum Behandlungsort über einen Lichtleiter erfolgt, durch besondere Ausbildung einer Behandlungskammer als Zubehör für zu bestrahlendes Gut auf dem Gebiet der Dental-Technik, insbesondere zum Photopolymerisieren von Form körpern aus Dental-Kunststoffen, zu erweitern.

Diese Aufgabe der Erfindung wird für ein Lichtgerät der eingangs charakterisierten Art erfindungsgemäß dadurch gelöst, daß die Behandlungskammer nach außen lichtdicht ausgebildet ist, daß wenigstens eine der den Innenraum begrenzenden Wände der Behandlungskammer verschiebbar oder verschwenkbar ausgebildet ist, daß eine Kammerwand eine Öffnung aufweist, durch die die Lichtzufuhr in die Behandlungskammer erfolgt, daß die die Öffnung enthaltende Wand gegenüber den weiteren Wänden der Behandlungskammer feststehend ist und auf ihrer Außenseite eine Aufnahme für den Lichtleiter aufweist, der mit einer als Tragarm dienenden Verstärkungshülse versehen ist und daß in der Behandlungskammer zu bestrahlender Dental-Kunststoff auf einem Halter oder Träger angeordnet ist.

Diese Ausbildung der Behandlungskammer hat den Vorteil, daß in die Augen der Bedienungsperson kein schädliches Licht gelangen kann, was besonders wichtig ist, wenn in der Behandlungskammer Dental-Kunststoffe unter Verwendung von Licht des kurzwelligen sichtbaren Spektralbereichs und/oder ultravioletten Spektralbereichs photopolymerisiert werden. Gleichzeitig bleibt aber die leichte Zugänglichkeit des Innenraums der Kammer zum Beschicken mit dem zu behandelnden Gut gewährleistet. Darüberhinaus ist die Behandlungskammer mittels der als Tragarm dienenden Verstärkungshülse leicht transportierbar. Als Zusatzvorrichtung zu einem vorhandenen Lichtgerät wird dessen Anwendungsbereich erweitert, so daß das Lichtgerät nicht nur zum Photopolymerisieren von Kunststoff-Zahnfüllungen im Mund benutzt werden kann, sondern auch zur extraoralen Photopolymerisation von Dental-Kunststoff-Arbeiten. Hierzu ist es nur erforderlich, den Lichtleiter an das Lichtgerät anzukuppeln.

In einer ersten bevorzugten Ausbildung der Behandlungskammer ist die den Kammerboden bildende Wand und die die Öffnung zur Lichtzufuhr enthaltende Wand gegenüber den weiteren Wänden feststehend ausgebildet.

In einer zweiten bevorzugten Ausbildung der Behandlungskammer ist der Kammerboden gegenüber der die Öffnung zur Lichtzufuhr enthaltenden Wand bewegbar ausgebildet.

Es hat sich für alle Ausbildungsarten der Behandlungskammern zur Sicherstellung der Lichtdichtheit nach außen bewährt, die feststehenden Wände am Rand mit einer Lichtfalle zu versehen, in die die Randbereiche der bewegbaren Wände eingreifen. Die Lichtfalle ist dabei vorteilhafterweise in Form von Nuten, wenigstens einer Rippe oder in Form von Dichtlippen gebildet.

Die Lichtzufuhr — unter Licht soll bevorzugt solches im Spektralbereich von 350 µm bis 500 µm zur Photopolymerisation von Dental-Kunststoffen zugeführt werden — erfolgt mittels eines Lichtleiters, der beispielsweise in Form eines Flüssigkeits-Lichtleiters, eines Faserlichtleiters oder eines Quarzglasstabes ausgebildet sein kann. Zur Halterung des Lichtleiters ist auf der Außenseite der die Öffnung zur Lichtzufuhr enthaltenden Wand eine Lichtleiter-Aufnahme angeordnet, in die sich das eine Ende des Lichtleiters bis nahe der Öffnung in der Kammerwand erstreckt. Das andere, freie Ende des Lichtleiters ist im Betriebszustand der Behandlungskammer in den im Lichtgerät vorgesehenen Anschluß eingeführt.

Zwischen dem in der Lichtleiter-Aufnahme angeordneten Ende des Lichtleiters und der Öffnung in der Kammerwand ist in den Strahlengang mindestens ein Licht-Filter oder eine Blende einführbar, die in einem Schieber, der in der Lichtleiter-Aufnahme geführt ist, angeordnet sind. Mittels Licht-Filter unterschiedlicher spektraler Durchlässigkeit wird ermöglicht, das Licht unterschiedlichen thermischen und spektralen Empfindlichkeiten der zu photopolymerisierenden Dental-Kunststoffen anzupassen. Außerdem kann der Schieber dazu verwendet werden, die Lichtzufuhr zur Behandlungskammer zu sperren, insbesondere dann, wenn zu behandelndes Gut in die Behandlungskammer gebracht oder behandeltes Gut aus ihr entnommen werden soll, ohne daß die Lichtquelle im Lichtgerät abgeschaltet oder der Lichtleiter aus dem Lichtgerät vorgesehen Anschluß herausgezogen werden muß.

In weiterer Ausbildung kann noch in einer Seitenwand der Kammer und/oder der Kammerdecke ein Sichtfenster eingesetzt werden, das auf seiner dem Innenraum der Kammer zugekehrten Oberfläche eine die Lichtstrahlung reflektierende Schicht aufweist. Diese Schicht kann beispielsweise aus einem aufgedampften Interferenzspiegel bestehen, der die Photopolymerisation der Dental-Kunststoffe bewirkende kurzwellige Strahlung reflektiert, jedoch für längerwellige Strahlung des sichtbaren Spektralbereichs durchlässig ist. Hierdurch ist es möglich, das zu behandelnde Gut während seiner Behandlung zu beobachten.

Wie sich aus Vorstehendem ergibt, bildet die Behandlungskammer eine preiswerte Zusatzvorrichtung zu einem für das Aushärten von Zahnfüllungen aus Kunststoff im Mund vorgesehenes Lichtgerät. Sie ist als Handgerät in einfacher Weise an ein solches Lichtgerät ankuppelbar ist und ermöglicht die Durchführung einer Vielzahl dental-technischer Arbeiten ohne Anschaffung eines aufwendigen Gerätes.

In der Zeichnung sind bevorzugte Ausführungsbeispiele für erfindungsgemäße Behandlungskammern dargestellt.

Es zeigt:

Figur 1 einen Längsschnitt durch eine Zusatzvorrichtung mit einer aufklappbaren Haube,

Figur 2 eine Draufsicht auf die Zusatzvorrichtung nach Figur 1.

Figur 3 eine als Standgerät ausgebildete Zusatzvorrichtung bei der die Haube schwenkbar angeordnet ist,

Figur 4 eine Zusatzvorrichtung, bei der gegenüber der Vorrichtung nach Figur 3 die Haube an Führungsschienen verschiebbar geführt ist,

Figur 5 eine Ausführung einer Lichtfalle und

Figur 6 eine an der Bodenplatte in Führungsschienen geführte Haube.

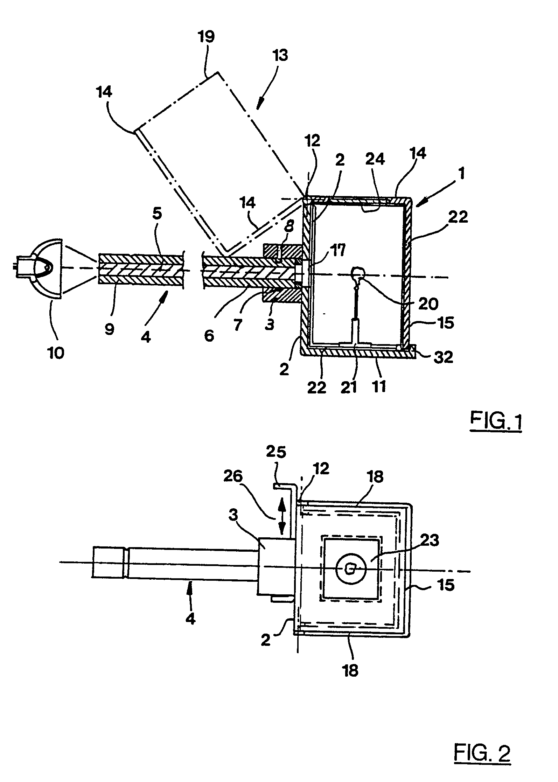

Die in Figur 1 gezeigte Zusatzvorrichtung weist eine Kammer 1 auf, an deren hinteren Seitenwand 2 eine Aufnahme 3 für einen Lichtleiter 4 angeordnet ist. Der Lichtleiter 4 besteht aus einem Faserkern 5, der von einer Verstärkungshülse 6, bevorzugt aus Aluminium, umgeben ist. Die Verstärkungshülse 6 ist an ihrem der Kammer 1 zugewandten Ende mit einer Ringnut 7 versehen, in die ein Federelement 8 oder eine Stellschraube der Aufnahme 3 eingreift, so daß die Verstärkungshülse 6 in der Aufnahme 3 verriegelt ist. Das andere der Kammer 1 abgewandte Ende 9 ist an ein Lichtgerät zum Photopolymerisieren von Dental-Kunststoffen, von dem in Figur 1 die Strahlungsquelle 10 in Form einer Lampe mit Reflektor angedeutet ist, anschließbar. Die Zusatzvorrichtung ist bevor zugt als selbsttragende Baueinheit ausgebildet, so daß die Verstärkungshülse 6 nicht nur den Faserkern 5 schützt, sondern gleichzeitig als Tragarm für die Kammer 1 dient. Gegebenenfalls können an dem Boden 11 der Kammer 1 nicht dargestellte Füße angeordnet sein, mit denen die Kammer 1 auf einer Arbeitsplatte aufsteht. Die Kammer 1 besitzt eine um eine Schwenkachse 12 schwenkbare Haube 13, die durch die Kammerdecke 14 und die Seitenwand 15, die der hinteren Seitenwand 2 mit der Öffnung 17, an deren äußeren Rand sich die Aufnahme 3 für den Lichtleiter 4 anschließt, gegenüberliegt, gebildet wird. Die Schwenkachse 12 der Haube 13 verläuft entlang der oberen Kante der hinteren Seitenwand 2. Die sich an die hintere Seitenwand 2 direkt anschließenden Seitenwände 18 können entweder fest mit der hinteren Seitenwand 2 und dem Boden 11 der Kammer 1 verbunden sein oder aber, wie in Figur 1 durch die strichpunktierten Linien 19 angedeutet, seitliche Wände der Haube 13 bilden. Die letztere Ausführungsvariante bietet den Vorteil. daß der Bereich vor der Öffnung 17 zur Lichtzufuhr frei zum Beschicken der Kammer 1 mit einem zu bestrahlenden Kunststoffteil 20, das an einem Halter oder Träger 21 gehalten wird, zugänglich ist. Alle Seitenwände 2, 15, 18 sowie der Boden 11 und die Kammerdecke 14 sind mit einer lichtreflektierenden Schicht 22 ausgekleidet oder im Falle von Metallwänden mit einer polierten Innenoberfläche versehen, so daß der gesamte Kammer-Innenraum einen Reflektor bildet. Gegebenenfalls können zumindest die Kammerdecke 14 und die der Öffnung 17 gegenüberliegende Seiten- wand 15 nach außen gewölbt ausgebildet sein, um die Strahlung in etwa auf das Zentrum der Kammer 1 zu fokussieren, in dem dann das Kunststoffteil 20 positioniert ist. Wie insbesondere die Figur 2 zeigt, ist in der Kammerdecke 14 ein Sichtfenster 23 eingesetzt, das auf seiner dem Kammer-Innenraum zugekehrten Oberfläche eine Reflexionsschicht 24 besitzt. Bei dieser Reflexionsschicht 24 kann es sich beispielsweise um eine Spiegelschicht handeln, die einerseits die Strahlung im Innenraum der Kammer 1 reflektiert und andererseits von der Außenseite der Kammer 1 durchsichtig ist, so daß für den Anwender die Möglichkeit gegeben ist, die richtige Positionierung des Kunststoffteiles 20 zu überprüfen.

Falls erforderlich kann zwischen der Aufnahme 3 des Lichtleiters 4 und der hinteren Seitenwand 2 ein Schieber 25, wie Figur 2 zeigt, vorgesehen werden, in den eine nicht näher gezeigte Blende oder ein oder mehrere Filter eingesetzt werden und der in Richtung des Pfeiles 26 verschiebbar ist, um das Filter oder die Blende vor der Öffnung 17 in der Seitenwand 2 zu positionieren.

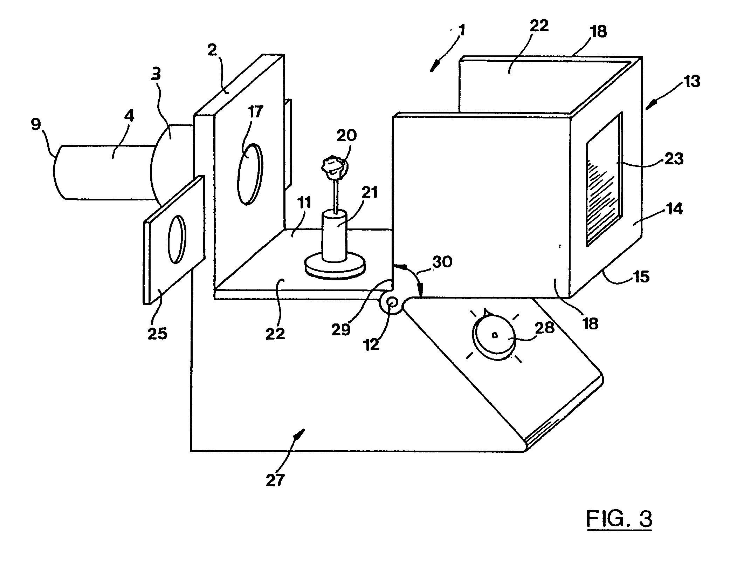

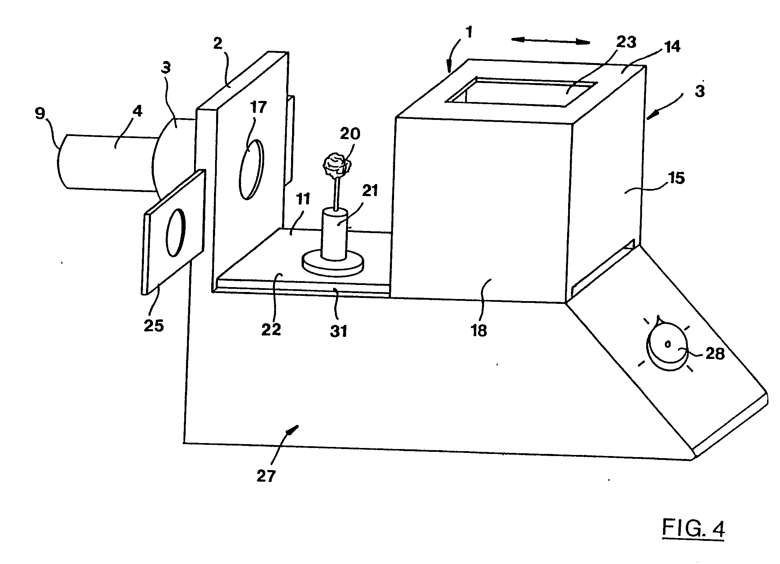

Während die anhand der Figuren 1 und 2 beschriebene Zusatzvorrichtung als selbsttragende Baueinheit aufgebaut ist, sind die in den Figuren 3 und 4 gezeigten Zusatzvorrichtungen als Standgeräte einsetzbar. Da diese Standgeräte von ihrem prinzipiellen Aufbau der Zusatzvorrichtung nach den Figuren 1 und 2 entspricht, sind die entsprechenden Bauteile mit den gleichen Bezugsziffern bezeichnet, die auch für die Bauteile in den Figuren 1 und 2 verwendet sind.

Die beiden Standgeräte besitzen ein Gehäuse 27, auf dessen Oberseite die Kammer 1 aufgesetzt ist. Der Boden 11 der Kammer 1 kann hierbei gleichzeitig die Abdeckung des Gehäuses 27 bilden. An der Unterseite des Gehäuses 27 sind Füße vorgesehen, die aus der Bodenplatte herausdrehbar sind, um die Haube 13 in unterschiedlicher Höhe über einer Arbeitsplatte anordnen zu können, so daß die Lage der Aufnahme 3 des Lichtleiters 4 der Lage der Aufnahme eines Lichtgerätes angepaßt werden kann. In das Gehäuse 27 ist bei diesem Standgerät ein Zeitrelais eingesetzt, mit einer Bedienungsscheibe 28 an der Stirnseite, über das die Bestrahlungszeit eingestellt werden kann. In einer vorteilhaften Ausgestaltung ist an der Rückseite des Gehäuses 27 eine Steckdose für die Stromversorgung des Lichtgerätes angeordnet, so daß über das Zeitrelais nach Ablauf der erforderlichen Bestrahlungszeit die Stromversorgung des Lichtgerätes unterbrochen wird. Im Gegensatz zu der Ausführung nach Figur 1 und Figur 2 wird bei der Zusatzvorrichtung nach Figur 3 die Haube 13 an einem Gelenk an der vorderen Seitenkante 29 des Bodens 11, durch die Schwenkachse 12 angedeutet, in Richtung des Pfeiles 30 gehalten werden. In geöffneter Stellung liegt die Haube 13 an einem Anschlag an, so daß der Öffnungswinkel auf die in Figur 3 gezeigte Stellung der Haube 13 begrenzt ist. Die Haube besteht hierbei aus der Kammerdecke 14 mit dem Sichtfenster 23, den beiden Seitenwänden 18 sowie der vorderen Seitenwand 15. In geöffneter Stellung ist der Kammer-Innenraum von drei Seiten frei zugänglich.

Um die Kammer 1 zu öffnen, kann alternativ zu der anhand der Figur 3 beschriebenen Ausführungsform, wie in Figur 4 dargestellt, die Kammer 1 am Gehäuse 27 an Führungsschienen 31 verschiebbar angeordnet sein. Eine gute Führung der Haube 13 wird dadurch gewährleistet, daß das Gehäuse 27 gegenüber der Ausführungsform nach Figur 3 verlängert ausgebildet ist, so daß auch bei geöffneter Haube die Haube 13 auf den Führungsschienen 31 aufliegt.

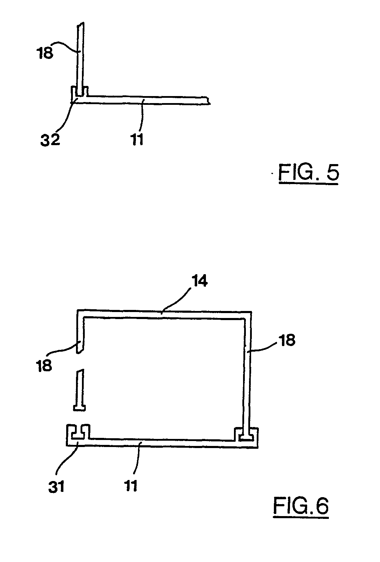

Durch die Führungsschienen 31, die den Rand der Haube 13 übergreifen bzw. umgreifen (siehe Figur 6), wird gleichzeitig eine Lichtfalle gebildet, die gewährleistet, daß kein für die Augen der Bedienungsperson schädliches Licht aus dem Innern der Kammer nach außen dringt. Um alle Randbereich der Haube gegen Lichteintritt abzudichten, sind den nicht über eine Führungsschiene 31 geführten Ränder der Haube 13 Dichtlippen oder Rippen 32, wie sie in Figur 1 an der vorderen Seitenkante des Bodens 11 angedeutet und in Figur 5 dargestellt sind, zugeordnet. Diese Dichtlippen oder Rippen 32 befinden sich bevorzugt an den nicht verschwenkbaren, zur Haube 13 gehörenden Wänden der Kammer 1.

## Patentansprüche

1. Lichtgerät mit einer Strahlungsquelle, einem Lichtleiter und einer Behandlungskammer an demjenigen Ende des Lichtleiters, das der Strahlungsquelle abgekehnt ist, wobei die Beahandlungskammer auf ihrer Innenseite lichtreflektierend ausgebildete wande aufweist, dadurch gekennzeichnet, daß die Behandlungskammer nach außen lichtdicht ausgebildet ist, daß wenigstens eine der den Innenraum begrenzenden Wände der Behandlungskammer verschiebbar oder versechwerkbar ausgebildet ist, daß eine Kammerwand (2) eine Öffnung (17) aufweist, durch die die Lichtzufuhr in die Behandlungskammer erfolgt, daß die die Öffnung (17) enthaltende Wand gegenüber den weiteren Wänden der Behandlungskammer feststehend ist und auf ihrer Außenseite eine Aufnahme (3) für den Lichtleiter (4) aufweist, der mit einer als Tragarm dienenden Verstärkungshülse (6) versehen ist und daß in der Behandlungskammer zu bestrahlender Dental-Kunststoff (20) auf einem Halter oder Träger (21) angeordnet ist.

2. Behandlungskammer nach Anspruch 1, dadurch gekennzeichnet, daß der Kammerboden (11) und die die Öffnung (17) zur Lichtzufuhr enthaltende Wand (2) gegenüber den weiteren Wänden (14, 15, 18) feststehend ausgebildet sind.

3. Behandlungskammer nach Anspruch 1, dadurch gekennzeichnet, daß der Kammerboden (11) gegenüber der die Öffnung (17) zur Lichtzufuhr enthaltenden Wand (2) bewegbar ausgebildet ist.

4. Behandlungskammer nach den Ansprüchen 1 bis 3, dadurch gekennzeichnet, daß die feststehende(n) Wand bzw. Wände (2, 18) und/oder der Kammerboden (11) am Rand mit einer Lichtfalle versehen sind, in die die Randbereiche der bewegbaren Wand bzw. Wände (15, 14) und/oder des Kammerbodens (11) eingreifen.

5. Behandlungskammer nach Anspruch 4, dadurch gekennzeichnet, daß die Lichtfalle in Form von Nuten gebildet ist.

6. Behandlungskammer nach Anspruch 4, dadurch gekennzeichnet, daß die Lichtfalle in Form wenigstens einer Rippe (32) gebildet ist.

7. Behandlungskammer nach Anspruch 4, dadurch gekennzeichnet, daß die Lichtfalle in Form von Dichtlippen gebildet ist.

8. Behandlungskammer nach Anspruch 1, dadurch gekennzeichnet, daß die Lichtleiter-Aufnahme (3) einen Schieber (25) aufweist, der mit wenigstens einem Licht-Filter und/oder einer Blende versehen ist.

9. Behandlungskammer nach Anspruch 1, dadurch gekennzeichnet, daß die die Öffnung (17) zur Lichtzufuhr enthaltende Wand (2) eine Seitenwand der Kammer (1) ist und wenigstens die die Kammerdecke (14) bildende Wand und die der Öffnung (17) zur Lichtzufuhr gegenüberliegende Seitenwand (15) als eine bewegbare Haube (13) ausgebildet sind.

10. Behandlungskammer nach Anspruch 9, dadurch gekennzeichnet, daß die Haube (13) um eine an der die Öffnung (17) zur Lichtzufuhr enthaltenden Seitenwand (2) angebrachten Gelenkverbindungen schwenkbar ist.

11. Behandlungskammer nach Anspruch 10, dadurch gekennzeichnet, daß die Gelenkverbindung an der oberen Kante der die Öffnung (17) zur Lichtzufuhr enthaltenden Seitenwand (2) so angeordnet ist, daß die Schwenkachse (12) entlang der oberen Kante verläuft.

12. Behandlungskammer nach Anspruch 9, dadurch gekennzeichnet, daß die Haube (13) verschiebbar an Führungsschienen (31) geführt ist.

13. Behandlungskammer nach Anspruch 3, dadurch gekennzeichnet, daß der Kammerboden (11) und mindestens eine Seitenwand (15, 18) der Kammer (1) horizontal verschiebbar an Führungsschienen (31) geführt ist.

14. Behandlungskammer nach einem oder mehreren der vorhergehenden Ansprüche, dadurch gekennzeichnet, daß in einer Seitenwand (15, 18) und/oder in der Kammerdecke (14) ein Sichtfenster (23) eingesetzt ist, das auf seiner dem Innenraum zugekehrten Oberfläche eine die Lichtstrahlung reflektierende Schicht (24) aufweist.

**Revendications**

1. Appareil d'éclairage avec une source de rayonnement, un guide de lumière et une chambre de traitement à l'extrémité du guide de lumière opposée à la source de rayonnement, les faces internes de cette chambre de traitement réfléchissant la lumière, caractérisé en ce que la chambre de traitement est construite de manière à être étanche à la lumière vers l'extérieur, en ce qu'au moins l'une des parois délimitant l'intérieur de la chambre de traitement est pivotante ou coulissante, en ce qu'une des parois de la chambre (2) présente une ouverture (17) par laquelle s'opère l'apport de lumière dans la chambre de traitement, en ce que la paroi présentant l'ouverture (17) est fixe par rapport aux autres parois de la chambre de traitement et possède sur sa face extérieure un support (3) pour le guide de lumière (4) doté d'une gaine de renforcement (6) servant de poignée et en ce que la matière synthétique dentaire (20) à irradier dans la chambre de traitement est placée sur un support ou une monture (21).

2. Chambre de traitement selon la revendication 1, caractérisée en ce que le fond de la chambre (11) et la paroi (2) possédant l'ouverture (17) d'entrée de la lumière sont fixes par rapport aux autres parois (14, 15, 18).

3. Chambre de traitement selon la revendication 1, caractérisée en ce que le fond de la chambre (11) est mobile par rapport à la paroi (2) possédant l'ouverture (17) d'entrée de la lumière.

4. Chambre de traitement selon les revendications 1 à 3, caractérisée en ce que la paroi fixe ou les parois fixes (2, 18) et/ou le fond de la chambre (11) sont dotés sur leurs bords d'un piège de lumière dans lequel s'insèrent les bords de la paroi mobile ou des parois mobiles (15, 14) et/ou du fond de la chambre (11).

5. Chambre de traitement selon la revendication 4, caractérisée en ce que le piège de lumière est réalisé sous la forme de rainures.

6. Chambre de traitement selon la revendication 4, caractérisée en ce que le piège de lumière est réalisé sous la forme d'au moins une nervure (32).

7. Chambre de traitement selon la revendication 4, caractérisée en ce que le piège de lumière est réalisé sous la forme de lèvres d'étanchéité.

8. Chambre de traitement selon la revendication 1, caractérisée en ce que le support (3) du guide de lumière possède un tiroir (25) portant au moins un filtre et/ou un diaphragme.

9. Chambre de traitement selon la revendication 1, caractérisée en ce que la paroi (2) possédant l'ouverture (17) d'entrée de la lumière est une paroi latérale de la chambre (1) et en ce que, au moins, la paroi formant le couvercle de la chambre (14) et la paroi latérale (15) opposée à l'ouverture (17) d'entrée de la lumière forment un capot mobile (13).

10. Chambre de traitement selon la revendication 9, caractérisée en ce que le capot (13) peut pivoter sur une articulation montée sur la paroi latérale (2) portant l'ouverture (17) d'entrée de la lumière.

11. Chambre de traitement selon la revendication 10, caractérisée en ce que l'articulation est disposée sur le bord supérieur de la paroi latérale (2) portant l'ouverture (17) d'entrée de la lumière, si bien que l'axe de pivotement (12) passe le long du bord supérieur.

12. Chambre de traitement selon la revendication 9, caractérisée en ce que le capot (13) coulisse sur des rails de guidage (31).

13. Chambre de traitement selon la revendication 3, caractérisée en ce que le fond de la chambre (11) et au moins une des parois latérales (15, 18) de la chambre (1) coulissent horizontalement sur des rails de guidage (31).

14. Chambre de traitement selon une ou plusieurs revendications précédentes, caractérisée en ce qu'une fenêtre d'observation (23) est ménagée dans une paroi latérale (15, 18) et/ou dans le couvercle de la chambre (14) et possède sur sa face tournée vers l'intérieur une couche (24) réfléchissant le rayonnement lumineux.

## Claims

1. Light apparatus with a radiation source, a photoconductor and a treatment chamber at the end of the photoconductor which is facing away from the radiation source, wherein the treatment chamber has walls on its inner side which are constructed so as to reflect light, characterized in that the treatment chamber is constructed so as to be light-tight to the exterior, that at least one of the walls of the treatment chamber delimiting the interior is constructed so as to be slidable or tiltable, that a chamber wall (2) has an opening (17), through which the supply of light into the treatment chamber takes place, that the wall containing the opening (17) is fixed with respect to the other walls of the treatment chamber and on its exterior has a holding fixture (3) for the photoconductor (4), which is provided with a reinforcement sleeve (6) serving as a support arm, and that in the treatment chamber, dental plastics material (20) which is to be irradiated is arranged on a holder or carrier (21).

2. Treatment chamber according to Claim 1, characterized in that the chamber base (11) and the wall (2) containing the opening (17) for the supply of light are constructed so as to be fixed with respect to the other walls (14, 15, 18).

3. Treatment chamber according to Claim 1, characterized in that the chamber base (11) is constructed so as to be movable with respect to the wall (2) containing the opening (17) for the supply of light.

4. Treatment chamber according to Claims 1 to 3 characterized in that the fixed wall or walls (2, 18) and/or the chamber base (11) are provided at the edge with a light trap, in which the marginal regions of the movable wall or walls (15, 14) and/or of the chamber base (11) engage.

5. Treatment chamber according to Claim 4, characterized in that the light trap is constructed in the form of grooves.

6. Treatment chamber according to Claim 4, characterized in that the light trap is constructed in the form of at least one rib (32).

7. Treatment chamber according to Claim 4, characterized in that the light trap is constructed in the form of sealing lips.

8. Treatment chamber according to Claim 1, characterized in that the photoconductor holding fixture (3) has a slider (25), which is provided with at least one light filter and/or a shutter.

9. Treatment chamber according to Claim 1, characterized in that the wall (2) containing the opening (17) for the supply of light is a side wall of the chamber (1) and at least the wall forming the chamber roof (14) and the side wall (15) lying opposite the opening (17) for the supply of light are constructed as a movable cover (13).

10. Treatment chamber according to Claim 9, characterized in that the cover (13) is orientable about swivel connections arranged on the side wall (2) containing the opening (17) for the supply of light.

11. Treatment chamber according to Claim 10, characterized in that the swivel connection is arranged on the upper edge of the side wall (2) containing the opening (17) for the supply of light, such that the swivel axis (12) runs along the upper edge.

12. Treatment chamber according to Claim 9, characterized in that the cover (13) is slidably guided on guide rails (31).

13. Treatment chamber according to Claim 3, characterized in that the chamber base (11) and at least one side wall (15, 18) of the chamber (1) is guided so as to be horizontally slidable on guide rails (31).

14. Treatment chamber according to one or more of the preceding Claims, characterized in that in a side wall (15, 18) and/or in the chamber roof (14) a viewing window (23) is inserted, which on its surface facing the interior has a layer (24) reflecting the light radiation.

FIG. 1

FIG. 2

1

FIG. 3

2

FIG. 4

EP 0 283 557 B1

FIG. 5

FIG. 6

4